# EUROPÄISCHE PATENTSCHRIFT

(11) **EP 2 386 402 B1**
(45) Veröffentlichungstag und Bekanntmachung des Hinweises auf die Patenterteilung: **24.01.2018**
(21) Anmeldenummer: 11003094.7
(22) Anmeldetag: 13.04.2011
(51) Int. Cl.: B29C 45/20, B29C 45/27, B22D 17/20

(54) **Heisskanaldüse und Spritzgießwerkzeug mit einer Heisskanaldüse**
Heating channel nozzle and injection moulding tool with a heating channel nozzle
Buse à canal chaud et outil de moulage par injection doté d'une buse à canal chaud

(30) Priorität: 10.05.2010 DE 102010020077
(43) Veröffentlichungstag der Anmeldung: 16.11.2011
(73) Patentinhaber: Günther Heisskanaltechnik GmbH, 35066 Frankenberg (DE)
(72) Erfinder: Günther, Herbert, 35108 Allendorf (DE)
(74) Vertreter: Patentanwälte Olbricht Buchhold Keulertz

(56) Entgegenhaltungen:
- EP-A1- 1 223 017
- EP-A2- 0 960 714
- WO-A1-97/28945
- N.H. LOH, S.B. TOR, K.A. KHOR: "Production of metal matrix composite part by powder injection molding", JOURNAL OF MATERIALS PROCESSING TECHNOLOGY, Nr. 108, 2001, Seiten 398-407, XP000002656883,

## Beschreibung

Die Erfindung betrifft eine Heißkanaldüse gemäß dem Oberbegriff von Anspruch 1, sowie ein Spritzgießwerkzeug mit einer Heißkanaldüse gemäß Anspruch 15.

Heißkanaldüsen und Spritzgießwerkzeuge sind allgemein bekannt. Sie werden üblicherweise bei der Verarbeitung von Materialien mittels Spritzgusstechnik verwendet, die erst bei einer gewissen Mindesttemperatur fließfähig und somit formbar sind. Dazu ist es notwendig, die Heißkanaldüse auf diese - vom zu verarbeitenden Werkstoff abhängige - Mindesttemperatur zu bringen und dort zu halten, was üblicherweise mit Hilfe von Heizvorrichtungen geschieht.

DE 295 01 450 U1 sieht beispielsweise eine Spritzgießdüse mit einem Materialrohr vor, durch das die zu verarbeitende Schmelze geleitet wird. Um das Materialrohr auf die erforderliche Temperatur zu bringen und diese zu halten ist eine elektrische Heizeinrichtung vorgesehen. Diese wird auf das Materialrohr aufgeschoben. Das auf diese Weise außenbeheizte Materialrohr wird, insbesondere zum Schutz der Heizung und zur thermischen Isolierung, von einem Schaft bzw. Gehäuse umschlossen. Hierbei ist zwischen der auf dem Materialrohr aufgebrachten Heizung und dem Schaft ein isolierender Luftspalt ausgebildet.

Problematisch ist dabei, dass die mit Hilfe solcher elektrischer Heizeinrichtungen erreichte Temperaturverteilung entlang der Düse und mithin entlang des Strömungskanals nur in begrenztem Umfang homogen ist, d.h. es können ohne Weiteres Temperaturschwankungen entlang des Materialrohres von mehr als 40 K bis 50 K auftreten.

Dies kann jedoch bei bestimmten Verarbeitungsverfahren - etwa beim Spritzgießen von Keramik- oder Metallpulvern - große Probleme bereiten. Bei diesen Verfahren wird - wie beispielsweise in EP 0 928 656 A2 dargestellt - ein Metall- oder Keramikpulver zunächst mit einem thermoplastischen, polymeren Bindemittel versetzt. Aus dieser Mischung (sogen. Feedstock) wird dann im Spritzgussverfahren ein Grünling hergestellt. Dieser wird anschließend weiter verarbeitet, indem das Bindemittel ausgetrieben und aus dem verbleibenden Rohling durch Sintern ein gewünschtes Fertigteil hergestellt wird. Bereits geringe Temperaturschwankungen im Spritzgießwerkzeug, insbesondere innerhalb der verwendeten Heißkanaldüse, können die Entmischung von Pulver und Binder erheblich beeinflussen, was im späteren Verfahren erhebliche Probleme bereiten kann.

In EP 1 223 017 A1 wird eine Heißkanaldüse offenbart, bei der eine vorfertigbare, d. h. separate, Heizung in Form eines hochwärmeleitfähigen Massivblocks von unten auf ein Materialrohr aufgesteckt wird. In dem Massivblock befindet sich ein erster Aufnahmekanal, in welchem das Materialrohr kraft- und formschlüssig Halt findet. Ein- oder beidseitig zu diesem ersten Aufnahmekanal besitzt der Massivblock wenigstens einen weiteren Aufnahmekanal für ein lineares Heizelement. Dabei kann das Heizelement ein von einem Fluid durchströmbares Rohrleitungsstück sein, das entweder in den Massivblock einsetzbar ist oder von diesem gebildet wird.

Sowohl in WO 97/28945 A1 als auch in EP 0 960 714 A2 ist ein Heißkanal-Spritzwerkzeug mit einer Heißkanaldüse offenbart, bei der ein Düsenkörper von einem mit einem Fluid gefüllten Heizmantel umgeben ist, der koaxial zum Düsenkörper angeordnet und von einer Hülle begrenzt ist. Unterhalb der Hülle liegt ein elektrisches Heizelement.

Ziel der Erfindung ist es, diese und weitere Nachteile des Standes der Technik zu vermeiden und eine verbesserte Heißkanaldüse zur Verfügung zu stellen. Die Heißkanaldüse soll insbesondere möglichst geringe Temperaturschwankungen entlang des Strömungskanals erzeugen/aufweisen und zum Einsatz bei der Spritzgussverarbeitung von Keramik- und Metallpulvern geeignet sein. Die Düse soll möglichst einfach aufgebaut und kostengünstig herstellbar sein.

Ein weiteres Ziel der Erfindung besteht darin, ein Spritzgusswerkzeug zur Verfügung zu stellen, das zum Einsatz bei der Spritzgussverarbeitung von Keramik- und Metallpulvern geeignet ist und möglichst einfach aufgebaut sowie kostengünstig herstellbar ist.

Hauptmerkmale der Erfindung sind im kennzeichnenden Teil von Anspruch 1 sowie in den nebengeordneten Ansprüchen 15, 18 und 19 angegeben. Ausgestaltungen sind Gegenstand der Ansprüche 2 bis 14 und 16 bis 17.

Bei einer Heißkanaldüse für ein Spritzgießwerkzeug mit einem Materialrohr und einem Schaft, der das Materialrohr zumindest abschnittsweise entlang der Längsachse des Materialrohres umschließt, wobei in dem Materialrohr ein Strömungskanal für eine fließfähige Masse ausgebildet ist, wobei das Materialrohr außenbeheizt ist, wobei zwischen dem Materialrohr und dem Schaft ein Hohlraum ausgebildet ist, wobei der Hohlraum von der Außenwand des Materialrohres und der Innenwand des Schaftes begrenzt ist, wobei der Hohlraum von einem Fluid durchströmbar ist, wobei das Fluid ein Wärmeträger ist, der Wärme an das Materialrohr abgibt, und wobei die Heißkanaldüse einen Zulauf für das Fluid aufweist, sieht die Erfindung vor, dass die Heißkanaldüse einen Ablauf für das Fluid aufweist.

Man erkennt, dass ein besonderer Vorteil der erfindungsgemäßen Heißkanaldüse darin liegt, dass der fluiddurchströmte Hohlraum eine Heizvorrichtung bildet. Diese Heizvorrichtung steht in unmittelbarem Kontakt mit dem Materialrohr. Dabei wird das Materialrohr von dem Wärmeträger umströmt und kann die von dem Fluid herangetragene Wärme somit direkt aufnehmen. Zweckmäßig ist es dazu, wenn die Heißkanaldüse einen Zulauf und einen Ablauf für das Fluid aufweist. So kann das Fluid außerhalb der Heißkanaldüse aufgeheizt werden und durch den Zulauf in den Hohlraum strömen. Dort gibt es die Wärme im gewünschten Maß ab und verlässt anschließend den Hohlraum wieder durch den Ablauf. Allein schon durch die unmittelbare Wärmeübertragung vom Fluid auf das Materialrohr, lässt sich die Temperatur des Materialrohres durch Regulierung der Fluidtemperatur sehr fein einstellen, weshalb die erfindungsgemäße Heißkanaldüse besonders gut für den Einsatz in Pulver-Spritzgussverfahren, insbesondere in CIM- bzw. MIM-Verfahren geeignet ist. Besonders günstig ist es in diesem Zusammenhang auch, wenn der Schaft der erfindungsgemäßen Heißkanaldüse aus einem schlecht wärmeleitenden Material gefertigt ist. Auf diese Weise wird nämlich keine oder nur geringfügig Wärme an das den Schaft umgebende temperierte Werkzeug abgegeben.

Das Fluid kann dabei beispielsweise unter einem Druck von 1 bis 9 bar, bevorzugt 3 bis 5 bar, besonders bevorzugt 4 bar, in den Hohlraum gepumpt werden und mit einer Strömungsgeschwindigkeit von etwa 10 bis 50 l/min, bevorzugt 20 bis 40 l/min, besonders bevorzugt 35 l/min, darin zirkulieren. Je nach gewünschtem Anwendungsfall sind jedoch auch andere Strömungsgeschwindigkeiten vorstellbar.

Günstig ist es zudem, wenn das Fluid schwer entflammbar ist. Dabei sollte das Fluid außerdem eine möglichst hohe Wärmekapazität haben. Man erkennt insgesamt, dass es besonders günstig ist, wenn das Fluid ein Öl ist. Ein solches Öl, kann beispielsweise einen Flammpunkt von mehr als 210°C und eine Filmtemperatur von mehr als 320°C aufweisen. Es kann daher ohne Probleme auf 200°C aufgeheizt werden, ohne dass es sich entzündet oder dass es zum Cracken des Fluids kommt, so dass entlang der Gesamten Länge eine Materialrohrtemperatur von 170 bis 180°C erreicht wird. Die Schwankung der Materialrohrtemperatur beträgt dabei nicht mehr als ± 5 K. Dabei richtet sich die Materialrohrtemperatur vor allem nach der Wahl des Trägermaterials, insbesondere nach der Kunststofftype. Die Dichtungen der Düse erlauben dabei Temperaturen bis 320°C.

Man erkennt dabei, dass es von Vorteil ist, wenn das Fluid einen Flammpunkt von mehr als 150°C, bevorzugt mehr als 200°C, besonders bevorzugt von mehr als 210°C aufweist und wenn das Fluid eine Filmtemperatur von mehr als 250°C, bevorzugt mehr als 300°C besonders bevorzugt mehr als 320°C aufweist. Auf diese Weise - nämlich dadurch, dass die Filmtemperatur des Fluides deutlich höher, als die maximale Betriebstemperatur der Düse liegt - ist sichergestellt, dass das Fluid auf jeden Fall bis zum erreichen der maximalen Düsentemperatur stabil ist und sich nicht zersetzt.

Um eine kontrollierte Beheizung des Materialrohres entlang seiner kompletten Länge zu erreichen, ist es von Vorteil, wenn die Strömungsrichtung des Fluides gelenkt wird. Dabei kann der Hohlraum beispielsweise kanalförmig ausgebildet sein. Günstig ist es dann beispielsweise, wenn der Hohlraum einen absteigenden Ast und einen aufsteigenden Ast aufweist, wobei der Zulauf in den absteigenden Ast mündet und wobei der Ablauf vom aufsteigenden Ast abgeht. Das erhitzte Fluid wird auf diese Weise zunächst in den absteigenden Ast des Hohlraumes gepumpt. Dort strömt es in der gleichen Richtung wie die im Materialrohr fließende Schmelze. Im unteren Bereich des Materialrohres wird das Fluid, beispielsweise durch einen Umlaufkanal, in den aufsteigenden Ast des Hohlraumes geleitet. Besonders vorteilhaft ist es dabei, wenn der Umlaufkanal im Bereich der gut wärmeleitenden Düsenspitze, d.h. angussnah, ausgebildet ist. Im aufsteigenden Ast des Hohlraumes fließt das Material dann entgegengesetzt zur Strömung der Schmelze wieder nach oben zum Ablauf, durch den es den Hohlraum verlässt. Durch diese gegenläufige Strömungsführung wird in der Summe eine sehr homogene Temperaturverteilung entlang des Materialrohres erreicht. Mithin wird auch die durch das Materialrohr fließende Schmelze auf einem sehr homogenen Temperaturniveau mit nur geringen Schwankungen gehalten.

Ein weiterer Vorteil der erfindungsgemäßen Lösung besteht darin, dass kein separates Bauteil für die Heizung im Bereich der Heißkanaldüse erforderlich ist. Die Düse weist somit nicht nur ein besonders homogenes Temperaturprofil auf, sondern kann auch eine sehr schlanke Bauform haben. Ein weiterer Vorteil der Erfindung liegt darin, dass keine elektrischen Verbindungen zum anschließen einer Heizung notwendig sind. Die Montage des Systems ist dadurch rasch und einfach möglich. Insbesondere können dabei keine Verdrahtungsfehler auftreten. Die Kontrolle der Temperatur erfolgt über ein Temperiergerät, durch welches das Fluid läuft und das beim Verwender bereits vorhanden ist. In diesem Zusammenhang ist es außerdem günstig, wenn am Düsenkopf eine Verdrehsicherung vorhanden ist, die einer Verwechslung der Zu- und Ableitungen für das Fluid vorbeugt, indem sie eine entsprechende Montageposition der Düse erzwingt.

Wichtig ist es bei einer solchen Heißkanaldüse, zu verhindern, dass das Fluid unplanmäßig aus dem Hohlraum austreten und beispielsweise in den Spalt zwischen Werkzeug und Heißkanaldüse gelangen kann. Gleichzeitig ist das Eindringen von Luftblasen zu vermeiden, um einen kontinuierlichen Fluid-Fluss zu gewährleisten. Es ist daher vorteilhaft, wenn zwischen dem Schaft und dem Materialrohr wenigstens eine Dichtung ausgebildet ist, die den Hohlraum luftdicht und dicht für das Fluid verschließt. Auch wenn insgesamt vorstellbar, ist, dass die Erfindung mit einer einzigen Dichtung auskommt, erkennt man in den dargestellten Ausführungsbeispielen, dass es günstig ist, wenn insgesamt wenigstens zwei Dichtungen vorhanden sind, nämlich jeweils eine im unteren und einem im oberen Bereich der Düse. Dabei ist es von Vorteil, wenn die Dichtung aus einem Material ist, das resistent gegenüber dem Fluid-Material ist. Günstig ist es außerdem, wenn die Dichtungen unterschiedliche Wärmeausdehnungseigenschaften von Materialrohr und Schaft zulassen und nach Möglichkeit sogar ausgleichen können.

Darüber hinaus ist es von Vorteil, wenn die Dichtungen derart angeordnet sind, dass sich der Schaft und das Materialrohr der Düse in axialer Richtung gegeneinander verschieben können, ohne dass ein Dichtungsleck auftritt. So umfasst eine besonders günstige Ausführungsvariante insgesamt wenigstens zwei Dichtungen, nämlich eine im Bereich des unteren Düsenendes und einem im Bereich des Düsenkopfes.

Die Dichtung im Bereich des unteren Düsenendes kann dabei beispielsweise so gestaltet sein, dass das untere Ende des Materialrohres von dem unteren Ende des Schaftes umgriffen wird. Dabei liegen die Außenwand des unteren Endes des Materialrohres und die Innenwand des unteren Endes des Schaftes aneinander an und können sich gegeneinander in axialer Richtung Zwischen beiden ist eine Dichtvorrichtung, bspw. ein Dichtring angeordnete. Dabei kann die Dichtvorrichtung entweder in die Außenwand des Materialrohres oder in die Innenwand des Schaftes eingelassen sein und mit der jeweiligen Wand in die sie eingelassen ist gegenüber der jeweils anderen Wand verschoben werden. Zur Herstellung der Dichtwirkung ist es dabei lediglich notwendig, dass die Dichtvorrichtung beim Verschieben der beiden Wände gegeneinander zwischen den Wänden angeordnet bleibt.

Nach dem gleichen Prinzip ist die Dichtung im Bereich des Düsenkopfes aufgebaut.

Eine solche Ausbildung der Dichtungen zwischen Materialrohr und Schaft ermöglicht es, den Schaft und das Materialrohr aus Materialien mit unterschiedlichen Ausdehnungskoeffizienten zu fertigen. Dies ist insbesondere mit Blick auf unterschiedliche Wärmeleitungseigenschaften des Schaftes und des Materialrohres von Vorteil. So ist es einerseits wünschenswert, dass das Materialrohr gut wärmeleitend ist, um einen möglichst optimalen Wärmetransfer vom das Materialrohr umströmenden Fluid auf die Schmelze zu gewährleisten. Andererseits sollte der Schaft jedoch möglichst wenig Wärme auf das umgebende Werkzeug ableiten, da dieses möglichst gekühlt sein sollte.

Man erkennt insgesamt dass es ein Vorteil der Erfindung darin liegt, dass das Materialrohr und der Schaft in axialer Richtung gegeneinander verschiebbar sind. Ein weiterer Vorteil der Erfindung ergibt sich, wenn der Schaft und das Materialrohr aus Materialien mit unterschiedlichen Ausdehnungskoeffizienten gefertigt sind.

Ist der Schaft aus hochfestem Material gefertigt, so wird zusätzlich Undichtigkeiten, die durch Verschleiß oder Verformung des Schaftes auftreten könnten wirksam vorgebeugt. Günstig ist es außerdem, wenn der Schaft aus schlecht wärmeleitfähigem Material gefertigt ist. Eine Temperaturübertragung vom Fluid auf das die Außenseite des Schaftes umgebende Werkzeug wird so möglichst gering gehalten.

Man erkennt, dass in einer bevorzugten Ausführungsform in das Materialrohr eine Düsenspitze eingesetzt ist. Die Düsenspitze kann einen offenen Anguss aufweisen, was für die Verarbeitung von Feedstocks aus Keramik- bzw. Metallpulver und eine thermoplastischen Binder von Vorteil ist. Denkbar ist jedoch auch, dass der Anguss unmittelbar am unteren Ende des Materialrohres ausgebildet ist oder dass es sich um eine Nadelverschlussdüse handelt.

Die Erfindung sieht außerdem ein Spritzgießwerkzeug mit wenigstens einer erfindungsgemäßen Heißkanaldüse vor. Ein solches Spritzgießwerkzeug kann insbesondere aufgrund der bereits oben genannten Vorteile zur Herstellungen von Grünlingen in einem Pulver-Injektions Verfahren verwendet werden.

In einer Ausführungsform der Erfindung ist es günstig, wenn das Spritzgießwerkzeug einen Verteiler aufweist, der wenigstens einen mit Fluid gefüllten Kanal aufweist und wenn der Kanal des Verteilers mit dem Hohlraum der Heißkanaldüse strömungsverbunden ist. Diese Verbindung erfolgt beispielsweise formschlüssig mit Hilfe einer am Düsenkopf ausgebildeten oder angebrachten Verdrehsicherung.

Dabei wird einerseits eine sichere Zu- und Ableitung des Fluides aus der Heißkanaldüse sichergestellt, andererseits kann der Kanal im Verteiler zusätzlich dazu dienen, auch den Verteiler auf einer entsprechenden Betriebstemperatur zu halten.

Die Erfindung sieht weiterhin die Verwendung einer erfindungsgemäßen Heißkanaldüse sowie die Verwendung eines erfindungsgemäßen Spritzgießwerkzeuges in einem Pulver-Injektions-Verfahren, bevorzugt in einem CIM- oder MIM-Verfahren vor. Dabei steht CIM für "ceramic powder injection molding" und MIM für "metal powder injection molding".

Sowohl die erfindungsgemäße Heißkanaldüse als auch das erfindungsgemäße Spritzgießwerkzeug sind aus den oben genannten Gründen - insbesondere aufgrund der homogenen Temperaturverteilung entlang des Materialrohres - für den Einsatz in einem solchen Verfahren besonders gut geeignet.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 eine Schnittzeichnung einer erfindungsgemäße Heißkanaldüse entlang der Schnittrichtung B-B von Fig. 2a;
Fig. 2a einen Querschnitt durch eine erfindungsgemäße Heißkanaldüse entlang der Schnittrichtung A-A von Fig. 1;
Fig. 2b eine Ausschnittsvergrößerung des Bereiches W aus Fig. 1;
Fig. 2c eine weitere Ausführungsform einer erfindungsgemäßen Heißkanaldüse
Fig. 2d eine Ausschnittsvergrößerung des Bereichs W aus Fig. 2c;
Fig. 3a eine weitere Schnittzeichnung durch eine erfindungsgemäße Heißkanaldüse;
Fig. 3b eine Gesamtansicht der Heißkanaldüse aus Fig. 3a;
Fig. 4 eine Ausschnittsvergrößerung des unteren Düsenendes einer weiteren Ausführungsform einer erfindungsgemäßen Heißkanaldüse;
Fig. 5 ein erfindungsgemäßes Spritzgießwerkzeug mit einer Heißkanaldüse; und
Fig. 6 eine weitere Ausführungsform eines erfindungsgemäßen Spritzgießwerkzeuges

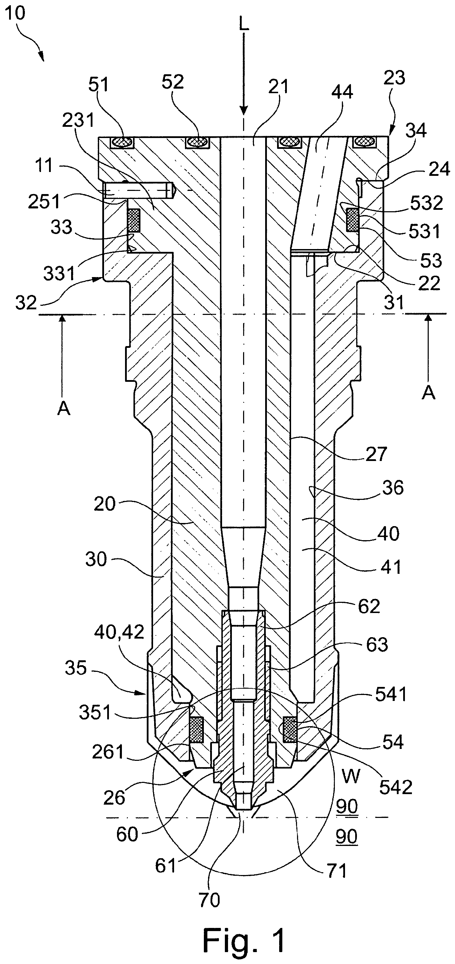

Die in den Figuren 1, 2c, 3a, 3b, 5 und 6 dargestellte erfindungsgemäße Heißkanaldüse 10 hat ein Materialrohr 20, in welchem ein Strömungskanal 21 für eine fließfähige Masse ausgebildet ist, und einen Schaft 30, der das Materialrohr 20 entlang dessen Längsachse L umfasst. In das untere Ende 26 des Materialrohres 20 ist eine Düsenspitze 60 eingesetzt. Die Düsenspitze 60 hat dazu einen Halsabschnitt 62, der wie im gezeigten Ausführungsbeispiel mit Hilfe eines Gewindes 63 in den unteren Abschnitt des Strömungskanals 21 eingeschraubt sein kann. Vorstellbar ist selbstverständlich auch, dass die Düsenspitze auf andere Weise als mit Hilfe eines Schraubgewindes befestigt im Materialrohr 20 befestigt wird. Im Kopf 23 des Materialrohres 20 ist außerdem ein Sicherungsbolzen 11 angeordnet. Dieser wirkt als Positionssicherung und verhindert, dass Materialrohr 20 und Schaft 30 gegeneinander verdreht werden.

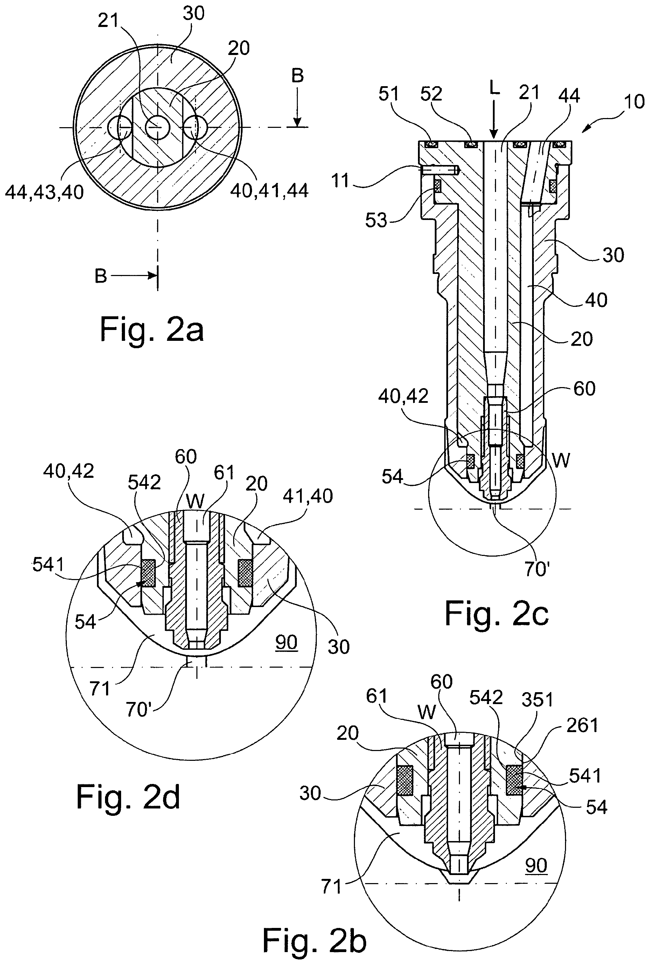

Zwischen dem Materialrohr 20 und dem Schaft 30 ist ein Hohlraum 40 ausgebildet. Dieser Hohlraum besteht aus einem absteigenden Ast 41, einem Umlauf 42 und einem aufsteigenden Ast 43 (vgl. Fig. 2a). Er wird von der Außenwand 27 des Materialrohres 20 und der Innenwand 36 des Schaftes 30 begrenzt. Man erkennt insbesondere in dem Querschnitt von Fig. 2a, dass sich der absteigende Ast 41 und der aufsteigende Ast 43 diametral zu beiden Seiten des Strömungskanals 21 gegenüber liegen. In den Bereichen zwischen dem aufsteigenden und dem absteigenden Ast 41, 43 des Hohlraumes 40 liegt der Schaft 30 mit seiner Innenwand 36 formschlüssig an der Außenwand 27 des Materialrohres 20 an.

Der Hohlraum 40 wird während des Betriebes der Heißkanaldüse 10 von einem Fluid durchströmt, wobei der Hohlraum 40 stets vollständig ausgefüllt ist. Bei dem Fluid handelt es sich bevorzugt um einen Wärmeträger, beispielsweise ein Wärmeträgeröl.

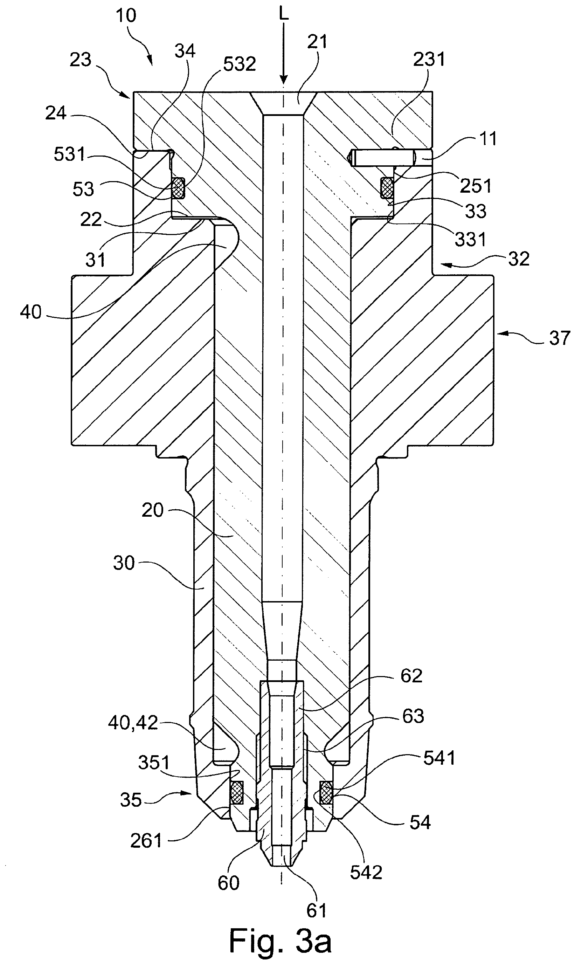

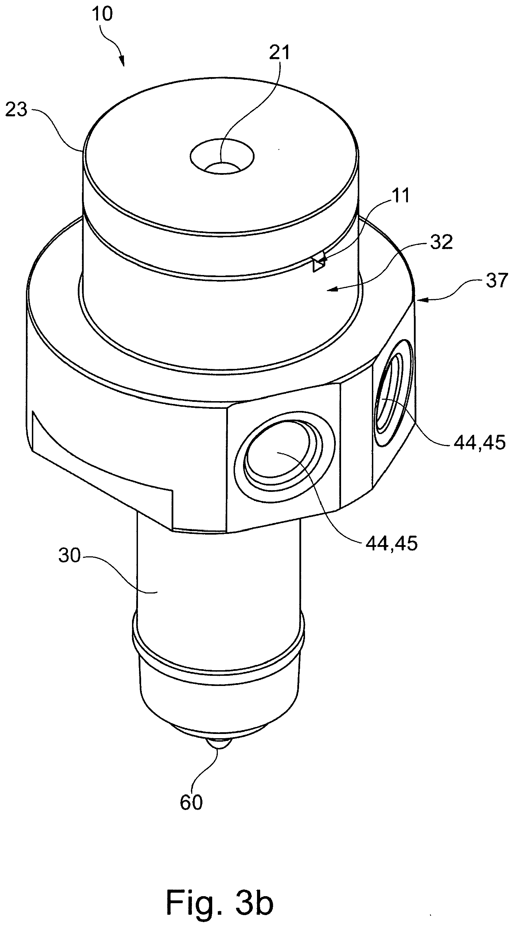

Um das Fluid in den Hohlraum 40 hinein und wieder heraus pumpen zu können, sind im Kopf 23 des Materialrohres 20 ein Zulauf 44 und ein Ablauf 45 (vgl. Fig. 2a) ausgebildet. Dabei sind bei den in den Figuren 1, 2a, 2c, 5 und 6 gezeigten Ausführungsvarianten sowohl der Zulauf 44 als auch der Ablauf 45 Bohrungen, die im Kopf 23 des Materialrohres 20 ausgebildet sind. Bei der in Figuren 3a und 3b dargestellten Ausführungsvariante hat der Schaft 30 unterhalb des Kopfabschnittes 32 einen umlaufenden Vorsprung 37, in welchem Zu- und Ablauf 44, 45 ausgebildet sind.

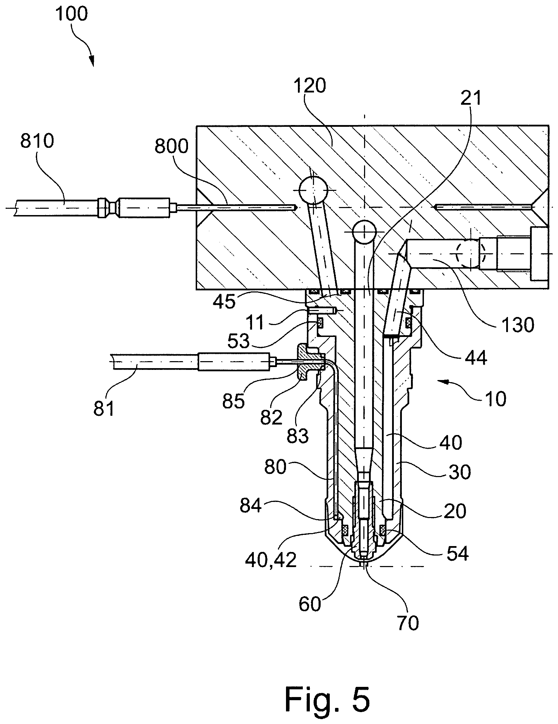

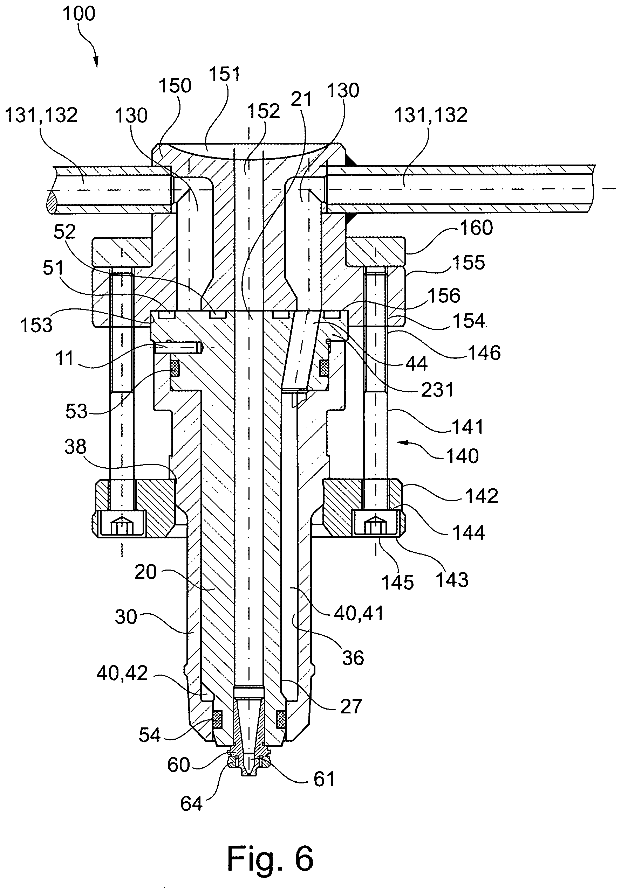

Um bei den Ausführungsbeispielen der Figuren 1, 2a, 2c, 3a, 3b, 4, 5 und 6 ein Austreten des Fluides aus dem Hohlraum 40 an anderer Stelle als dem Zulauf 44 oder dem Ablauf 45 zu verhindern, sind zwischen dem Materialrohr 20 und dem Schaft 30, sowie zwischen dem Kopf 23 des Materialrohres 20 und dem Verteiler 120 (vgl. Fig. 5, 6) mehrere Dichtungen 51, 52, 53, 54 vorhanden. Dabei dienen die Dichtungen 53, 54, die zwischen dem Materialrohr 20 und dem Schaft 30 ausgebildet sind der Dichtung des fluiddurchströmten Hohlraumes 40 innerhalb der Heißkanaldüse 10.

Eine erste Dichtung 53 ist im Kopfbereich der Düse 10 ausgebildet. Man erkennt in Fig. 1 (wie auch in den übrigen Figuren), dass dort sowohl das Materialrohr 20 als auch der Schaft 30 jeweils einen Kopf bzw. Kopfabschnitt 23, 32 aufweisen. Der Kopf 23 des Materialrohres 20 hat einen über den Umfang des übrigen Materialrohres 20 herausragenden Vorsprung 231 mit einem Absatz 22. Im Kopfabschnitt 32 des Schaftes 30 ist gegengleich zum Vorsprung 231 eine Ausnehmung 33 mit einem weiteren Absatz 31 ausgebildet. Der Absatz 22 des Materialrohres 20 liegt im Betriebszustand dicht an dem Absatz 31 des Schaftes 30 an. Außerdem liegt ein weiter oben ausgebildeter zweiter Absatz 24 des Kopfes 23 an der Stirnfläche 34 des Schaftes an. Zusätzlich ist zwischen der Innenwand 331 der Ausnehmung 33 und der Außenwand 251 des Vorsprungs 231 ein Dichtring 531 - beispielsweise ein O-Ring - angeordnet. Zur Aufnahme des Dichtringes 531 kann - wie im dargestellten Ausführungsbeispiel gezeigt - in der Außenwand 251 des Vorsprunges 231 eine umlaufende Furche 532 ausgebildet sein. Man erkennt, dass der Dichtring 531 insgesamt zwischen der Innenwand 36 des Schaftes 30 und der Außenwand 27 des Materialrohres 20 angeordnet ist. Man erkennt weiter, dass der Schaft 30 und das Materialrohr 20 entlang der Längsachse L in axialer Richtung gegeneinander verschoben werden können, ohne dass die Dichtwirkung der Dichtung 53 verringert wird. Der Dichtring 531 ist und bleibt nämlich selbst bei einer Verschiebung der genannten Bauteile gegeneinander stets zwischen diesen angeordnet.

Eine zweite Dichtung 54 ist im Bereich des unteren Endes der Düse ausgebildet (vgl. auch Fig. 2b und Fig. 2d bzw. Fig. 3a). Der Schaft 30 hat dort eine Ausnehmung 35 deren innerer Durchmesser dem äußeren Durchmesser des unteren Endes 26 des Materialrohrs 20 entspricht. Die Innenwand 351 der Ausnehmung 35 liegt daher dicht an der Außenwand 261 des unteren Endes 26 an. Zusätzlich ist zwischen der Innenwand 351 und der Außenwand 261 ein weiterer Dichtring 541 angeordnet. Zur Aufnahme des Dichtringes 541 dient eine im unteren Ende 26 des Materialrohres 20 ausgebildete umlaufende Furche 542. Auch hier erkennt man, dass der Dichtring 541 insgesamt zwischen der Innenwand 36 des Schaftes 30 und der Außenwand 27 des Materialrohres 20 angeordnet ist. Man erkennt weiter, dass der Schaft 30 und das Materialrohr 20 entlang der Längsachse L in axialer Richtung gegeneinander verschoben werden können, ohne dass die Dichtwirkung der Dichtung 54 verringert wird. Der Dichtring 541 ist und bleibt nämlich selbst bei einer Verschiebung der genannten Bauteile gegeneinander stets zwischen diesen angeordnet.

Zwei weitere Dichtungen 51, 52 sind zwischen dem Kopf 23 des Materialrohres 20 und einem Verteiler 120 bzw. einem Angussstück 150 des Spritzgießwerkzeuges 100 (vgl. Fig. 5 und Fig. 6) angeordnet. Sie verhindern, dass Fluid aus dem Zulauf 44 bzw. Ablauf 45 oder dem Kanal 130 austreten und in den Bereich zwischen der Heißkanaldüse 10 und dem Verteiler 120 gelangen kann.

Man erkennt in den Fig. 1, 2b, 2c, 2d und 4 außerdem, dass die Düse 10 derart in ein Werkzeug 90 eingesetzt ist, dass im unteren Düsenbereich zwischen der Düse 10 und dem Werkzeug 90 ein Luftspalt 71 ausgebildet ist. In den übrigen Bereichen liegt der Schaft 30 zumindest punktuell formschlüssig an der Seitenwand des Werkzeuges 90 an. Der Luftspalt 71 füllt sich im Betrieb der Düse 10 sukzessive mit Spritzgussmasse, d.h. im Falle von Keramikpulver- oder Metallpulverinjektion mit dem flüssigen Feedstock aus Keramik- bzw. Metallpulver und Polymerbinder. Die meisten dieser Feedstocks sind jedoch stark abrassiv, so dass es von Vorteil ist, wenn der Schaft 30 aus einem möglichst verschleißfesten Material gefertigt ist. Auf diese Weise wird Undichtigkeiten, die beispielsweise durch ein Verrutschen der Düse 10, wenn die Form des Schaftes 30 verschleißt, auftreten können, wirksam vorgebeugt. Günstig ist es zudem, wenn das Material des Schaftes 30 möglichst schlecht wärmeleitend ist. Der Temperaturübergang vom durch den Hohlraum 40 strömenden Fluid auf das den Schaft 30 umgebende Werkzeug 90 wird dann möglichst gering gehalten.

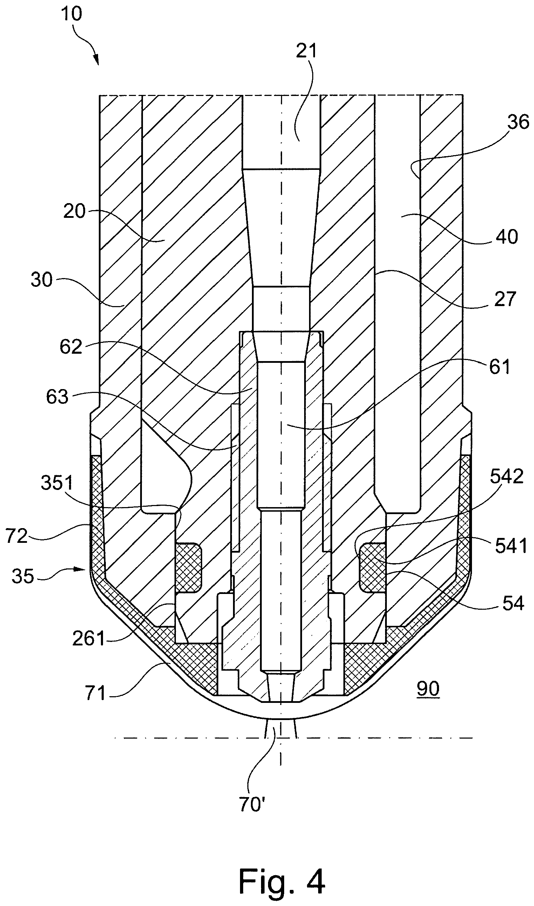

In diesem Zusammenhang ist es von besonderem Vorteil, wenn - wie in Fig. 4 dargestellt - am unteren Ende der Düse 10 eine Isolierkappe 72 in den Luftspalt 71 eingesetzt ist. Häufig haben nämlich im Keramik- bzw. Metallpulver-Gussverfahren verwendete Feedstocks eine recht gute Wärmeleitfähigkeit. Füllt sich der Luftspalt 71 mit der Spritzgussmasse, so besteht an dieser Stelle die Gefahr, dass sich einer Wärmebrücke zwischen dem Schaft 30 bzw. dem Materialrohr 20 und dem Werkzeug 90 bildet. Die in Fig. 4 dargestellte Isolierkappe 72 verhindert dies wirksam. Sie ist bevorzugt aus schlecht wärmeleitfähigem Material und umgreift das untere Ende 26 des Materialrohres 20 und des Schaftes 30. Selbst wenn sich nun der - ebenfalls die Wäremisolation unterstützende - Luftspalt 71 mit Spritzgussmasse füllt, wird der Wärmeübergang vom Schaft 30 auf die im Luftspalt 71 befindliche Spritzgussmasse und von dort auf das Werkzeug 90 nun durch die Isolierkappe 72 deutlich spürbar verringert, wenn nicht gar unterbunden.

Im Betrieb der Heißkanaldüse gelangt das Fluid durch den im Kopf 23 des Materialrohres 20 ausgebildeten Zulauf 44 (Fig. 1, 2a, 2d, 5, 6) bzw. durch einen im Vorsprung 37 ausgebildeten Zulauf 44, 45 (Fig. 3a, 3b) in den absteigenden Ast 41 des Hohlraumes 40. Dort strömt es entlang der Längsachse L parallel zur Strömungsrichtung der Schmelze im Strömungskanal 21. Im Bereich des unteren Endes 26 des Materialrohres 20 strömt das Fluid in den Umlauf 42, der den absteigenden und den aufsteigenden Ast 41, 43 miteinander verbindet. Auf diese Weise wird die im Strömungskanal 21 vom Kopf 23 des Materialrohres 20 zum unteren Ende 26 des Materialrohres 20 fließende Spritzgussmasse über die gesamte Länge des Materialrohres 20 auf einer konstanten Temperatur mit nur minimalen Schwankungen gehalten. Im Falle der Keramikpulver- oder Metallpulverinjektion wird so ein Entmischen von Pulver und Binder wirksam verhindert.

Die auf diese Weise konstant auf einer Temperatur gehaltene Schmelze verlässt die Düse 10 durch die im unteren Ende 26 des Materialrohres 20 eingesetzte Düsenspitze 60. In der Düsenspitze 60 ist ein Düsenspitzenkanal 61 ausgebildet, der in einen offenen Anguss 70, 70' mündet. Dabei ragt das untere Ende der Düsenspitze 60 in einer ersten - in den Fig. 1 und 2b dargestellten - Ausführungsform bis in eine den Anguss 70 bildende Ausnehmung im Werkzeug 90 hinein. In einer anderen - in den Fig. 2c, 2d und 4 dargestellten Ausführungsform - endet die Düsenspitze 60 oberhalb des Angusses 70' im Bereich des Luftspaltes 71.

Das in Fig. 5 dargestellte erfindungsgemäße Spritzgießwerkzeug 100 hat einen Verteiler 120 an welchen eine erfindungsgemäße Heißkanaldüse 10 angeschlossen ist. In dem Verteiler 120 sind zwei Kanäle 130 erkennbar, von denen einer mit dem Zulauf 44 des Hohlraumes 40 der Heißkanaldüse 10 und der andere mit dem Ablauf 45 des Hohlraumes 40 verbunden ist. Durch diese Kanäle 130 wird das Fluid von einer (nicht dargestellten) Wärmetauschervorrichtung, die zur entsprechenden Temperierung des Fluides dient, zur erfindungsgemäßen Heißkanaldüse 10 geleitet. Man erkennt, dass das Fluid dabei nicht nur zum beheizen der Heißkanaldüse 10, sondern gleichzeitig auch zum beheizen des Verteilers 120 genutzt wird.

Die in der Fig. 5 dargestellte erfindungsgemäße Heißkanaldüsen 10 hat außerdem einen Temperaturfühler 80, der ebenfalls zwischen Materialrohr 20 und Schaft 30 angeordnet ist. Sein unteres Ende 84 erfasst dabei die Temperatur im Bereich des Umlaufes 40, 42. Um zu Verhindern, dass Fluid durch den Kanal, in dem der Temperaturfühler 80 angeordnet ist, entweichen kann, ist der Kanal mit einem Stopfen 82 dichten verschlossen. Zwischen dem Stopfen 82 und dem Schaft 30 ist zusätzlich eine Dichtung 83 angeordnet, die dem gleichen Zweck dient. Der Temperaturfühler 80 wird durch eine in dem Stopfen 82 ausgebildete passgenaue Bohrung 85 hindurch nach außen geführt, wo er mit entsprechenden elektrischen Anschlüssen 81 verbunden ist. Dabei wird der Temperaturfühler 80 mit dem Stopfen 82 dicht verlötet. Selbstverständlich können auch die in den Figuren 1, 2a, 2b, 2c und 2d gezeigten erfindungsgemäßen Heißkanaldüsen 10 einen solchen Temperaturfühler 80 samt Verschlussstopfen 82 aufweisen.

Es ist selbstverständlich vorstellbar, dass auch jede der übrigen dargestellten Ausführungsformen mit einem solchen Temperaturfühler 80 ausgebildet sein kann.

Ein weiterer Temperaturfühler 800 ist im Bereich des Verteilers 100 angeordnet. Dieser ist ebenfalls mit elektrischen Anschlüssen 810 verbunden und dient der Temperaturkontrolle im Verteiler 100. Auf diese Weise kann starken Temperaturschwankungen bereits im Verteiler vorgebeugt werden. Die Temperaturfühler 800, 80 sind dabei jeweils bevorzugt in der Nähe des jeweiligen Zu- bzw. Ablaufs 44, 45 des Hohlraumes 40 angeordnet. So kann eventuell auftretenden Temperaturschwankungen - die nur durch das Temperiergerät beeinflusst werden - schnellstmöglich entgegengewirkt werden.

Das in Fig. 6 dargestellte Spritzgießwerkzeug 100 hat ebenfalls eine an erfindungsgemäße Heißkanaldüse 10. Diese ist mit Hilfe einer Haltevorrichtung 140 mit einer temperierten Aufnahmevorrichtung 150 verbunden.

Die Heißkanaldüse 10 hat - wie bereits in Bezug auf die übrigen Ausführungsbeispiele beschrieben - ein Materialrohr 20, in welchem ein Strömungskanal 21 für eine fließfähige Masse ausgebildet ist, und einen Schaft 30, der das Materialrohr 20 entlang dessen Längsachse L umfasst. In das untere Ende 26 des Materialrohres 20 ist eine Düsenspitze 60 eingesetzt. Die Düsenspitze 60 hat dazu einen Halsabschnitt 62, der wie im gezeigten Ausführungsbeispiel mit Hilfe eines Gewindes 63 in den unteren Abschnitt des Strömungskanals 21 eingeschraubt ist. Die Düsenspitz 60 stützt sich an ihrem unteren Ende auf einen Ring 64. Dieser dient vor allem der Isolierung der Düsenspitze 60 gegenüber dem (nicht dargestellten) Werkzeug 90, auf dem sich der Ring 64 seinerseits abstützt. Daher ist es günstig, den Ring 64 aus einem schlecht wärmeleitenden Material herzustellen. Darüber hinaus kann der Ring 64 auch die korrekte Positionierung der Heißkanaldüse 10 gegenüber dem Werkzeug 90 unterstützen. Im Kopf 23 des Materialrohres 20 ist außerdem ein Sicherungsbolzen 11 angeordnet. Dieser wirkt als Positionssicherung und verhindert, dass Materialrohr 20 und Schaft 30 gegeneinander verdreht werden.

Zwischen dem Materialrohr 20 und dem Schaft 30 ist ein Hohlraum 40 bestehend aus einem absteigenden Ast 41, einem Umlauf 42 und einem (in Fig. 6 nicht dargestellten) aufsteigenden Ast 43, ausgebildet. Er wird von der Außenwand 27 des Materialrohres 20 und der Innenwand 36 des Schaftes 30 begrenzt. In den Bereichen zwischen dem aufsteigenden und dem absteigenden Ast 41, 43 des Hohlraumes 40 liegt der Schaft 30 mit seiner Innenwand 36 - wenigstens punktuell - formschlüssig an der Außenwand 27 des Materialrohres 20 an.

Der Hohlraum 40 ist mit einem Fluid gefüllt, bei dem es sich bevorzugt um einen Wärmeträger, beispielsweise ein Wärmeträgeröl handelt. Sowohl der Zulauf 44 als auch der (in Fig. 6 nicht dargestellte) Ablauf 45, die zur Zu- bzw. Ableitung des Fluides dienen, sind Bohrungen, die im Kopf 23 des Materialrohres 20 ausgebildet sind.

Zwischen dem Materialrohr 20 und dem Schaft 30, sowie zwischen dem Kopf 23 des Materialrohres 20 und der Aufnahmevorrichtung 150 sind mehrere Dichtungen 51, 52, 53, 54 vorhanden. Dabei dienen die Dichtungen 53, 54, die zwischen dem Materialrohr 20 und dem Schaft 30 ausgebildet sind, der Abdichtung des fluiddurchströmten Hohlraumes 40 innerhalb der Heißkanaldüse 10, die Dichtungen 51, 52, die zwischen Materialrohr 20 und Verteiler 120 ausgebildet sind, der Abdichtung zwischen Heißkanaldüse 10 und Verteiler 120. Zur genaueren Beschreibung der Dichtungen 51, 52, 53, 54 siehe das in Bezug auf Fig. 1 bereits ausgeführte.

In der Aufnahmevorrichtung 150 ist ein Schmelzekanal 152 ausgebildet, der über einen Anschluss 152 mit Schmelze versorgt werden kann. Der Anschluss 152 kann beispielsweise mit einer Maschinendüse verbunden werden. Seitlich des Schmelzekanals 152 sind Kanäle 130 ausgebildet, die im Montierten Zustand des Spritzgießwerkzeuges 100 mit den Zulauf 44 bzw. den (nicht dargestellten) Ablauf 45 des Hohlraumes 40 strömungsverbunden sind. Jeder Kanal 130 hat eine seitlich der Aufnahmevorrichtung 150 nach außen geführten Zu- bzw. Ableitung 131, 132. Dabei kann es sich im dargestellten Ausführungsbeispiel um an die Aufnahmevorrichtung 150 angelötete oder angeschweißte Röhrchen.

Man erkennt in Fig. 6 außerdem, dass die Aufnahmevorrichtung 150 eine Ausnehmung 153 aufweist. Diese ist an der dem Anschluss 152 gegenüberliegenden Seite der Aufnahmevorrichtung 150 ausgebildet. In die Ausnehmung 153 ist der Kopf 231 des Materialrohres 20 der Heißkanaldüse 10 eingesetzt, sodass die Dichtungen 51, 52 in direktem Kontakt mit der Unterseite 156 der Aufnahmevorrichtung 150 stehen.

Die Aufnahmevorrichtung 150 hat außerdem einen Flansch 155, in welchem Gewindebohrungen 154 ausgebildet sind. Die Gewindebohrungen 154 dienen der Aufnahme von Fixierelementen 141 der Haltevorrichtung 140.

Die Haltevorrichtung 140 besteht im dargestellten Ausführungsbeispiel aus einem Halteelement 142 und zwei Fixierelementen 141. Die Fixierelemente 141 sind im dargestellten Ausführungsbeispiel Bolzen mit einem Kopf 145 und einem Gewinde 146. Das Halteelement 142 ist ringförmig und umfasst den Schaft 30 der Heißkanaldüse 10. Dabei findet es einen Anschlag an einem am Schaft 30 ausgebildeten Absatz 38. Zur Aufnahme ist für jedes Fixierelement 141 in dem Halteelement 142 eine Ausnehmung 143 ausgebildet. Man erkennt, dass es günstig ist, wenn die Ausnehmung 143 einen nach innen vorspringenden Absatz 144 aufweist. An diesem Absatz 144 findet der Kopf 145 des jeweils aufgenommen Fixierelementes 141 bei der Montage einen Anschlag. Gleichzeitig greift das Gewinde 146 des Fixierelementes 141 in die gegenüberliegend angeordnete Gewindebohrung 154 der Aufnahmevorrichtung 150 ein.

Man erkennt, dass die Fixierelemente 141 im montierten Zustand die Heißkanaldüse 10 gegen die Aufnahmevorrichtung 150 spannen. Gleichzeitig spannen sie auch den Schaft 30 gegen das Materialrohr 20. Insgesamt werden auf diese Weise Aufnahmevorrichtung 150, Schaft 30 und Materialrohr 20 derart fest zusammen gehalten, dass das Fluid an keiner Stelle aus dem Hohlraum 40 oder aus den Zu- bzw. Ableitungen 130, 44, 45 austreten kann.

Zwischen dem Flansch 155 und dem (nicht dargestellten) Werkzeug ist zur Isolierung eine ringförmige Abdeckung 160 angeordnet. Diese ist bevorzugt aus einem schlechtwärmeleitfähigen Material und verhindert den Wärmeübergang von dem heißen Flansch 155 zum kalten Werkzeug.

Die Erfindung ist nicht auf eine der vorbeschriebenen Ausführungsformen beschränkt, sondern in vielfältiger Weise abwandelbar.

Man erkennt, dass es bei einer Heißkanaldüse 10 für ein Spritzgießwerkzeug mit einem Materialrohr 20 und einem Schaft 30, der das Materialrohr 20 entlang der Längsachse L des Materialrohres 20 umschließt, wobei in dem Materialrohr 20 ein Strömungskanal 21 für eine fließfähige Masse ausgebildet ist, wobei das Materialrohr 20 außenbeheizt ist und wobei zwischen dem Materialrohr 20 und dem Schaft 30 ein Hohlraum 40 ausgebildet ist, von Vorteil ist, wenn der Hohlraum 40 von der Außenwand 27 des Materialrohres 20 und der Innenwand 36 des Schaftes 30 begrenzt ist, wenn der Hohlraum 40 von einem Fluid durchströmt ist, wobei das Fluid ein Wärmeträger ist, der Wärme an das Materialrohr 20 abgibt, und wenn die Heißkanaldüse 10 einen Zulauf 44 und einen Ablauf 45 für das Fluid aufweist. Dabei ist es insbesondere günstig, wenn das Fluid ein Öl ist.

Zweckmäßig ist es, wenn das Fluid einen Flammpunkt von mehr als 150°C, bevorzugt mehr als 200°C, besonders bevorzugt von mehr als 210°C aufweist und wenn das Fluid eine Filmtemperatur von mehr als 250°C, bevorzugt mehr als 300°C besonders bevorzugt mehr als 320°C aufweist.

Bevorzugt ist der Hohlraum 40 kanalförmig ausgebildet, wobei der Hohlraum 40 einen absteigenden Ast 41 und einen aufsteigenden Ast 43 aufweisen kann, wobei Zulauf 44 in den absteigenden Ast 41 münden kann und wobei der Ablauf 45 vom aufsteigenden Ast 43 abgehen kann.

Zweckmäßig ist zwischen dem Schaft 30 und dem Materialrohr 20 wenigstens eine Dichtung 51, 53, 54 ausgebildet ist, die den Hohlraum 40 luftdicht und dicht für das Fluid verschließt.

Vorteilhaft ist es außerdem, wenn das Materialrohr 20 und der Schaft 30 in axialer Richtung gegeneinander verschiebbar sind und wenn der Schaft 30 und das Materialrohr 20 aus Materialien mit unterschiedlichen Ausdehnungskoeffizienten gefertigt sind.

Günstig ist es auch, wenn der Schaft 30 aus hochfestem Material gefertigt ist und/ oder wenn der Schaft 30 aus schlecht wärmeleitfähigem Material gefertigt ist.

Zweckmäßig ist in das Materialrohr 20 eine Düsenspitze 60 eingesetzt ist.

Man erkennt außerdem, dass ein Spritzgießwerkzeug 100 mit wenigstens einer erfindungsgemäßen Heißkanaldüse 10 von besonderem Vorteil ist. Dabei ist es vor allem günstig, wenn das Spritzgießwerkzeug 100 einen Verteiler 120 aufweist, der wenigstens einen mit Fluid gefüllten Kanal 130 aufweist und wenn der Kanal 130 des Verteilers 120 mit dem Hohlraum 40 der Heißkanaldüse 10 strömungsverbunden ist.

Weiterhin erkennt man den Vorteil der Verwendung einer erfindungsgemäßen Heißkanaldüse 10 in einem Pulver-Injektions-Verfahren, bevorzugt in einem Metall- oder Keramikpulverspritzgussverfahren sowie den Vorteil der Verwendung eines erfindungsgemäßen Spritzgießwerkzeuges 110 in einem Pulver-Injektions-Verfahren, bevorzugt in einem Metalloder Keramikpulverspritzgussverfahren.

**Bezugszeichenliste**

| | | | |
|---|---|---|---|
| L | Längsachse | 45 | Ablauf |
| | | 51 | Dichtung |
| 10 | Heißkanaldüse | 52 | Dichtung |
| 11 | Sicherungsbolzen | 53 | Dichtung |
| 20 | Materialrohr | 531 | Dichtring |
| 21 | Strömungskanal | 532 | Furche |
| 22 | Absatz | 54 | Dichtung |
| 23 | Kopf | 541 | Dichtring |
| 231 | Vorsprung | 542 | Furche |
| 24 | Absatz | 60 | Düsenspitze |
| 251 | Außenwand | 61 | Düsenspitzenkanal |
| 26 | unteres Ende | 62 | Halsabschnitt |
| 261 | Außenwand | 63 | Gewinde |
| 27 | Außenwand | 64 | Ring |
| 30 | Schaft | 70, 70' | Anguss |
| 31 | Absatz | 71 | Luftspalt |
| 32 | Kopfabschnitt | 72 | Isolierkappe |
| 33 | Ausnehmung | 80 | Temperaturfühler |
| 331 | Innenwand | 81 | elektrischer Anschluss |
| 34 | Stirnfläche | 82 | Stopfen |
| 35 | Ausnehmung | 83 | Dichtung |
| 351 | Innenwand | 84 | unteres Ende |
| 36 | Innenwand | 85 | Bohrung |
| 37 | Vorsprung | 90 | Werkzeug |
| 38 | Absatz | | |
| | | 100 | Spritzgießwerkzeug |
| 40 | Hohlraum | 120 | Verteiler |
| 41 | Absteigender Ast | 130 | Kanal |
| 42 | Umlauf | 131 | Zuleitung |
| 43 | Aufsteigender Ast | 132 | Ableitung |
| 44 | Zulauf | | |
| 140 | Haltevorrichtung | 152 | Schmelzekanal |
| 141 | Fixierelement | 153 | Ausnehmung |
| 142 | Halteelement | 154 | Gewindebohrung |
| 143 | Ausnehmung | 155 | Flansch |
| 144 | Absatz | | |
| 145 | Kopf | 160 | Abdeckung |
| 146 | Gewinde | | |
| | | 800 | Temperaturfühler |
| 150 | Aufnahmevorrichtung | 810 | elektrischer Anschluss |
| 151 | Anschluss | | |

## Patentansprüche

1. Heißkanaldüse (10) für ein Spritzgießwerkzeug mit einem Materialrohr (20) und einem Schaft (30), der das Materialrohr (20) zumindest abschnittsweise entlang der Längsachse (L) des Materialrohres (20) umschließt, wobei in dem Materialrohr (20) ein Strömungskanal (21) für eine fließfähige Masse ausgebildet ist, wobei das Materialrohr (20) außenbeheizt ist, wobei zwischen dem Materialrohr (20) und dem Schaft (30) ein Hohlraum (40) ausgebildet ist, wobei der Hohlraum (40) von der Außenwand (27) des Materialrohres (20) und der Innenwand (36) des Schaftes (30) begrenzt ist,
wobei der Hohlraum (40) von einem Fluid durchströmbar ist, wobei das Fluid ein Wärmeträger ist, der Wärme an das Materialrohr (20) abgibt, und wobei die Heißkanaldüse (10) einen Zulauf (44) für das Fluid aufweist, **dadurch gekennzeichnet, dass** die Heißkanaldüse (10) einen Ablauf (45) für das Fluid aufweist.

2. Heißkanaldüse nach Anspruch 1, **dadurch gekennzeichnet, dass** das Fluid ein Öl ist.

3. Heißkanaldüse nach einem der Ansprüche 1 oder2 **dadurch gekennzeichnet, dass** der Hohlraum (40) kanalförmig ausgebildet ist.

4. Heißkanaldüse nach einem der Ansprüche 1 bis 3, **dadurch gekennzeichnet, dass** der Hohlraum (40) einen absteigenden Ast (41) und einen aufsteigenden Ast (43) aufweist.

5. Heißkanaldüse nach Anspruch 4, **dadurch gekennzeichnet, dass** der Zulauf (44) in den absteigenden Ast (41) mündet und dass der Ablauf (45) vom aufsteigenden Ast (43) abgeht.

6. Heißkanaldüse nach einem der Ansprüche 1 bis 5, **dadurch gekennzeichnet, dass** zwischen dem Schaft (30) und dem Materialrohr (20) wenigstens eine Dichtung (51, 53, 54) ausgebildet ist, die den Hohlraum (40) luftdicht und dicht für das Fluid verschließt.

7. Heißkanaldüse nach einem der Ansprüche 1 bis 6, **dadurch gekennzeichnet, dass** das Materialrohr (20) und der Schaft (30) in axialer Richtung gegeneinander verschiebbar sind.

8. Heißkanaldüse nach einem der Ansprüche 1 bis 7, **dadurch gekennzeichnet, dass** der Schaft (30) und das Materialrohr (20) aus Materialien mit unterschiedlichen Ausdehnungskoeffizienten gefertigt sind.

9. Heißkanaldüse nach einem der Ansprüche 1 bis 8, **dadurch gekennzeichnet, dass** der Schaft (30) aus hochfestem Material gefertigt ist.

10. Heißkanaldüse nach einem der Ansprüche 1 bis9, **dadurch gekennzeichnet, dass** der Schaft (30) aus schlecht wärmeleitfähigem Material gefertigt ist.

11. Heißkanaldüse nach einem der Ansprüche 1 bis 10, **dadurch gekennzeichnet, dass** in das Materialrohr (20) eine Düsenspitze (60) eingesetzt ist.

12. Spritzgießwerkzeug (100) mit wenigstens einer Heißkanaldüse (10) nach wenigstens einem der Ansprüche 1 bis 11.

13. Spritzgießwerkzeug nach Anspruch 12, **dadurch gekennzeichnet, dass** es einen Verteiler (120) aufweist, der wenigstens einen mit Fluid gefüllten Kanal (130) aufweist, wobei der Kanal (130) des Verteilers (120) mit dem Hohlraum (40) der Heißkanaldüse (10) strömungsverbunden ist.

14. Verwendung einer Heißkanaldüse (10) nach einem der Ansprüche 1 bis 11 in einem Pulver-Injektions-Verfahren, bevorzugt in einem Metall- oder Keramikpulverspritzgussverfahren.

15. Verwendung eines Spritzgießwerkzeuges (110) nach einem der Ansprüche 12 bis 13 in einem Pulver-Injektions-Verfahren, bevorzugt in einem Metall- oder Keramikpulverspritzgussverfahren.

## Claims

1. Hot channel nozzle (10) for an injection moulding tool with a material pipe (20) and a shaft (30) which encloses the material pipe (20) at least in sections along the longitudinal axis (L) of the material pipe (20), wherein a flow channel (21) for a flowable mass is formed in the material pipe (20), wherein the material pipe (20) is heated externally, wherein a cavity (40) is formed between the material pipe (20) and the shaft (30), wherein the cavity (40) is delimited by the outer wall (27) of the material pipe (20) and the inner wall (36) of the shaft (30),
wherein a fluid can flow through the cavity (40), wherein the fluid is a heat carrier which transfers heat to the material pipe (20) and wherein the hot channel nozzle (10) has an inflow (44) for the fluid, **characterised in that** the hot channel nozzle (10) has an outflow (45) for the fluid.

2. Hot channel nozzle according to claim 1, **characterised in that** the fluid is an oil.

3. Hot channel nozzle according to any one of claims 1 or 2, **characterised in that** the cavity (40) is formed in a channel shape.

4. Hot channel nozzle according to any one of claims 1 to 3, **characterised in that** the cavity (40) has a descending branch (41) and an ascending branch (43).

5. Hot channel nozzle according to claim 4, **characterised in that** the inflow (44) discharges into the descending branch (41) and **in that** the outflow (45) exits from the ascending branch (43).

6. Hot channel nozzle according to any one of claims 1 to 5, **characterised in that** at least one seal (51, 53, 54) is formed between the shaft (30) and the material pipe (20) which seals the cavity (40) in an air-tight and tight manner for the fluid.

7. Hot channel nozzle according to any one of claims 1 to 6, **characterised in that** the material pipe (20) and the shaft (30) are displaceable towards each other in the axial direction.

8. Hot channel nozzle according to any one of claims 1 to 7, **characterised in that** the shaft (30) and the material pipe (20) are made from materials with different expansion coefficients.

9. Hot channel nozzle according to any one of claims 1 to 8, **characterised in that** the shaft (30) is made from high-strength material.

10. Hot channel nozzle according to any one of claims 1 to 9, **characterised in that** the shaft (30) is made from a poor heat-conducting material.

11. Hot channel nozzle according to any one of claims 1 to 10, **characterised in that** a nozzle tip (60) is inserted into the material pipe (20).

12. Injection moulding tool (100) with at least one hot channel nozzle (10) according to at least one of claims 1 to 11.

13. Injection moulding tool according to claim 12, **characterised in that** it has a distributer (120) which has at least one channel (130) filled with fluid, wherein the channel (130) of the distributor (120) is flow-connected to the cavity (40) of the hot channel nozzle (10).

14. Use of a hot channel nozzle (10) according to any one of claims 1 to 11 in a powder injection method, preferably in a metal or ceramic powder injection moulding method.

15. Use of an injection moulding tool (110) according to any one of claims 12 to 13 in a powder injection method, preferably in a metal or ceramic powder injection moulding method.

## Revendications

1. Buse à canal chaud (10) pour un outil de moulage par injection avec un tube de matériau (20) et avec un tronc (30) qui entoure le tube de matériau (20) au moins en partie le long de l'axe longitudinal (L) du tube de matériau (20),
dans laquelle un canal d'écoulement (21) destiné à une masse fluide est réalisé dans le tube de matériau (20),
dans laquelle le tube de matériau (20) est chauffé de l'extérieur,
dans laquelle un espace creux (40) est réalisé entre le tube de matériau (20) et le tronc (30),
dans laquelle l'espace creux (40) est limité par la paroi extérieure (27) du tube de matériau (20) et par la paroi intérieure (36) du tronc (30),
dans laquelle l'espace creux (40) peut être traversé par un fluide,
dans laquelle le fluide est un caloporteur qui délivre de la chaleur au tube de matériau (20)
et laquelle buse à canal chaud (10) comporte une arrivée (44) pour le fluide,
**caractérisée en ce que** la buse à canal chaud (10) comporte une sortie (45) pour le fluide.

2. Buse à canal chaud selon la revendication 1, **caractérisée en ce que** le fluide est une huile.

3. Buse à canal chaud selon l'une quelconque des revendications 1 ou 2, **caractérisée en ce que** l'espace creux (40) est réalisé en forme de canal.

4. Buse à canal chaud selon l'une quelconque des revendications 1 à 3, **caractérisée en ce que** l'espace creux (40) comporte une branche descendante (41) et une branche montante (43).

5. Buse à canal chaud selon la revendication 4, **caractérisée en ce que** l'arrivée (44) débouche dans la branche descendante (41) et **en ce que** la sortie (45) part de la branche montante (43).

6. Buse à canal chaud selon l'une quelconque des revendications 1 à 5, **caractérisée en ce qu**'au moins un joint d'étanchéité (51, 53, 54), qui ferme l'espace creux (40) de manière étanche à l'air et étanche au fluide, est réalisé entre le tronc (30) et le tube de matériau (20).

7. Buse à canal chaud selon l'une quelconque des revendications 1 à 6, **caractérisée en ce que** le tube de matériau (20) et le tronc (30) peuvent être déplacés en direction axiale l'un par rapport à l'autre.

8. Buse à canal chaud selon l'une quelconque des revendications 1 à 7, **caractérisée en ce que** le tronc (30) et le tube de matériau (20) sont fabriqués en des matériaux ayant des coefficients de dilatation différents.

9. Buse à canal chaud selon l'une quelconque des revendications 1 à 8, **caractérisée en ce que** le tronc (30) est fabriqué en un matériau à haute résistance.

10. Buse à canal chaud selon l'une quelconque des revendications 1 à 9, **caractérisée en ce que** le tronc (30) est fabriqué en un matériau mauvais conducteur thermique.

11. Buse à canal chaud selon l'une quelconque des revendications 1 à 10, **caractérisée en ce qu**'une pointe de buse (60) est placée dans le tube de matériau (20).

12. Outil de moulage par injection (100) avec au moins une buse à canal chaud (10) selon au moins l'une des revendications 1 à 11.

13. Outil de moulage par injection selon la revendication 12, **caractérisé en ce qu**'il comporte un distributeur (120) qui comporte au moins un canal (130) rempli de fluide, dans lequel le canal (130) du distributeur (120) est relié quant à l'écoulement à l'espace creux (40) de la buse à canal chaud (10).

14. Utilisation d'une buse à canal chaud (10) selon l'une quelconque des revendications 1 à 11 dans un procédé de moulage par injection de poudres, de préférence dans un procédé de moulage par injection de poudres métalliques ou céramiques.

15. Utilisation d'un outil de moulage par injection (110) selon l'une quelconque des revendications 12 à 13 dans un procédé de moulage par injection de poudres, de préférence dans un procédé de moulage par injection de poudres métalliques ou céramiques.
